# FASCICULE DE BREVET EUROPEEN

(11) **EP 3 532 341 B1**
(45) Date de publication et mention de la délivrance du brevet: **09.06.2021**
(21) Numéro de dépôt: 17804228.9
(22) Date de dépôt: 25.10.2017
(51) Int. Cl.: B60N 2/30, B60N 2/20

(54) **SIÈGE MODULABLE POUR VÉHICULE AUTOMOBILE**
MODULARER SITZ FÜR EIN KRAFTFAHRZEUG
MODULAR SEAT FOR A MOTOR VEHICLE

(30) Priorité: 25.10.2016 FR 1660365
(43) Date de publication de la demande: 04.09.2019
(73) Titulaire: Renault S.A.S., 92100 Boulogne-Billancourt (FR)
(72) Inventeur: DA CRUZ, Frederic, 78950 Gambais (FR)
(86) Numéro de dépôt international: PCT/FR2017/052940
(87) Numéro de publication internationale: WO 2018/078284

(56) Documents cités:
- WO-A1-2010/122263
- FR-A1- 2 915 147
- JP-A- H08 183 378
- US-A- 5 603 550

## Description

### DOMAINE TECHNIQUE AUQUEL SE RAPPORTE L'INVENTION

La présente invention concerne de manière générale l'agencement d'un habitacle de véhicule automobile.

Elle concerne plus particulièrement un siège de véhicule automobile comprenant :
- une structure porteuse,
- une assise montée mobile sur la structure porteuse entre une position d'utilisation et une position escamotée, et
- un dossier monté mobile en basculement sur la structure porteuse autour d'un axe inférieur, entre une position d'utilisation et une position rabattue vers l'avant.

Elle concerne également un véhicule automobile équipé d'un tel siège.

L'invention trouve une application particulièrement avantageuse dans la réalisation d'un siège passager, c'est-à-dire d'un siège prévu pour être situé à côté du siège conducteur du véhicule.

### ARRIERE-PLAN TECHNOLOGIQUE

Les véhicules automobiles comprennent généralement deux sièges avant situés côte-à-côte. L'un des sièges, appelé siège conducteur, est situé en regard du volant tandis que l'autre, appelé siège passager, permet d'accueillir un éventuel passager.

Il est connu d'équiper ce siège passager d'un dossier rabattable vers l'avant. Ainsi, lorsqu'il n'y a pas de passager dans le véhicule, le conducteur peut basculer ce dossier afin de libérer un espace de chargement communiquant avec l'arrière du véhicule. Cet espace de chargement supplémentaire s'avère particulièrement intéressant lorsque le conducteur souhaite embarquer dans le véhicule des objets de longueurs importantes.

On connait ainsi du document FR3024681 un siège escamotable tel que défini en introduction, dont l'assise peut être relevée vers l'avant et le dossier rabattu vers l'avant, en lieu et place de l'assise.

Un intérêt de ce siège est qu'une fois l'assise relevée et le dossier rabattu, la face arrière de ce dossier crée, avec le reste du plancher du véhicule, une surface plane facilitant la charge d'objets de grandes longueurs. On parle de « plancher plat ».

On souhaite toutefois optimiser encore le volume de chargement libéré par le siège lorsque le dossier est rabattu vers l'avant.

On souhaite également offrir au conducteur une zone au niveau de laquelle il peut facilement poser une feuille sur laquelle il doit écrire.

### OBJET DE L'INVENTION

Pour cela, on propose selon l'invention un siège tel que défini dans la revendication 1.

De cette façon, lorsque le siège passager est inoccupé, il est possible de faire basculer non pas l'ensemble du dossier, mais seule la partie centrale du dossier du siège. Cette dernière peut ainsi servir de tablette, afin par exemple de permettre au conducteur de pouvoir écrire sur une feuille posée dessus.

Cette tablette se trouve en effet positionnée à une hauteur idéale pour cela (elle se trouve située au-dessus de l'assise), ce qui ne serait pas le cas si c'était l'ensemble du dossier qui servait de tablette.

Faire basculer la seule partie centrale du dossier présente en outre d'autres avantages.

A titre d'exemple, puisque cette partie centrale présente des dimensions inférieures à celles de l'ensemble du dossier, lorsqu'elle est en position basculée, la partie centrale ne vient pas gêner le conducteur lorsqu'il utiliser le levier de vitesses.

Ses dimensions réduites permettent en outre de ne pas avoir à se soucier d'une éventuelle interférence entre la partie centrale du dossier et les coussins de sécurité (« air-bag » en anglais) puisque cette partie centrale se trouve en dehors des zones de déploiement des coussins de sécurité. Il n'est donc nul besoin pour le conducteur de déconnecter le déploiement de ces coussins de sécurité lorsque la partie centrale du dossier est basculée en position tablette.

Préférentiellement, l'assise est montée mobile par rapport à la structure porteuse au moyen d'au moins une bielle qui est articulée, d'un côté, sur l'assise et, de l'autre, sur la structure porteuse, autour de deux axes de pivot distincts.

Ainsi est-il possible, d'une part, de faire pivoter les bielles par rapport à la structure porteuse pour libérer l'espace dans lequel se loge le dossier lorsqu'il est en position rabattue vers l'avant, et d'autre part, de faire pivoter l'assise par rapport aux bielles de manière que l'assise puisse se loger sous la planche de bord du véhicule (dans l'emplacement des jambes du passager).

De cette manière, l'assise libère davantage d'espace dans le véhicule, ce qui permet au véhicule de loger des objets de longueurs encore accrues.

D'autres caractéristiques avantageuses et non limitatives du siège conforme à l'invention sont les suivantes :
- lesdits deux axes de pivot sont parallèles ;
- chaque bielle présente une forme coudée ;
- l'assise présentant, en position d'utilisation, un bord avant et un bord arrière, chaque bielle est articulée sur l'assise à une distance des bords avant et arrière de l'assise qui est supérieure au quart de la longueur de l'assise ;
- il est prévu des moyens de blocage de la mobilité de l'assise par rapport à la structure porteuse, combinés à un moyen de déverrouillage de ces moyens de blocage ;
- le dossier comporte deux parties, dont une partie périphérique qui est montée mobile en basculement sur la structure porteuse autour de l'axe inférieur, et une partie centrale qui est montée mobile en basculement sur la partie périphérique autour d'un axe supérieur distinct de l'axe inférieur, chacune des deux parties comportant une armature et, à l'avant de l'armature, une partie d'une garniture du dossier ;
- la partie centrale du dossier comporte à l'arrière une coque rigide ;
- ladite coque rigide comporte un socle fixé à l'armature de la partie centrale du dossier, et une plaquette articulée sur ce socle ; et
- il est prévu un support équipé de moyens de fixation au plancher du véhicule automobile, et la structure porteuse est montée mobile en translation sur le support selon un axe de glissière sensiblement parallèle audit axe inférieur.

L'invention concerne aussi un véhicule automobile comportant un siège conducteur et un siège passager tel que défini ci-dessus.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un siège escamotable conforme à l'invention ;
- la figure 2 est une vue schématique du siège de la figure 1 monté dans l'habitacle d'un véhicule automobile ;
- la figure 3 est une vue schématique du siège de la figure 1, représenté avec une partie centrale de son dossier en position rabattue ;
- les figures 4 à 6 sont des vues schématiques en perspective de différents détails des armatures du siège de la figure 1 ;
- les figures 7 à 10 sont des vues schématiques en perspective du siège de la figure 1 monté dans l'habitacle de la figure 2, cet habitacle accueillant des charges de différentes dimensions et/ou un passager.

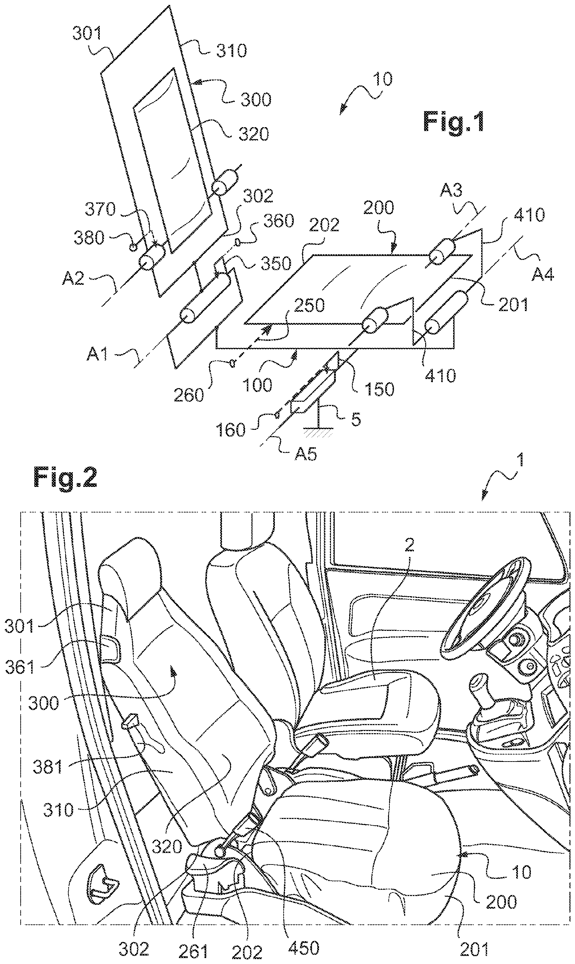

Sur la figure 1, on a représenté de manière très schématique un siège 10 prévu pour être monté dans un habitacle d'un véhicule automobile.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes «inférieur » et «supérieur » seront utilisés par rapport à ce véhicule automobile, la partie inférieure d'un élément désignant la partie de cet élément qui est située du côté du plancher du véhicule et la partie supérieure désignant la partie de cet élément qui est située du côté du toit.

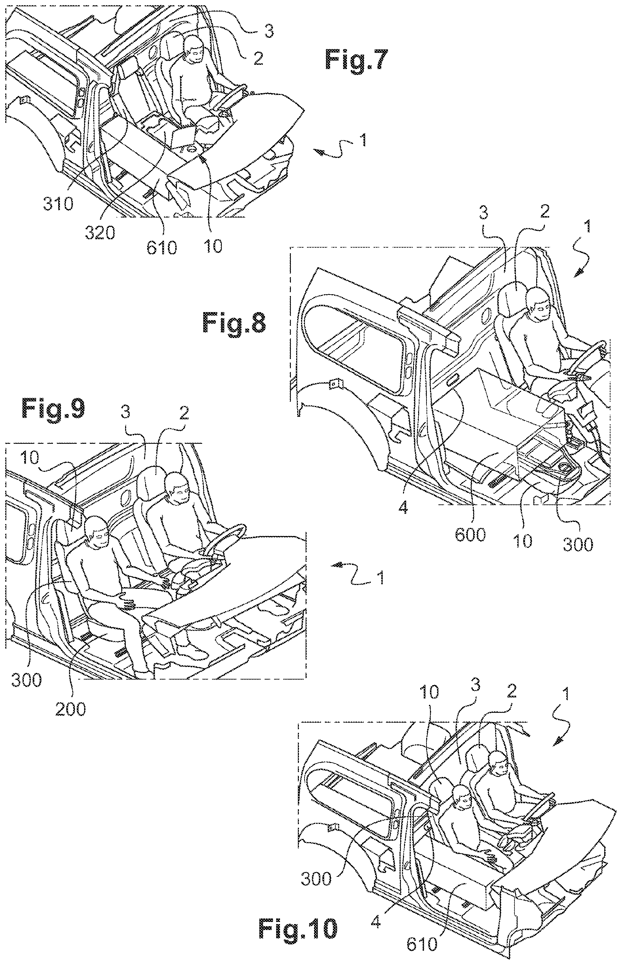

Tel qu'il apparaît sur les figures 7 à 10, ce véhicule automobile 1 est un « véhicule utilitaire », c'est-à-dire un véhicule comportant une unique rangée de sièges. Il ne comporte en revanche pas de siège ou de banquette arrière, puisque l'ensemble de la zone arrière du véhicule constitue un coffre de chargement.

Ici, comme le montrent bien les figures 7 à 10, l'habitacle du véhicule automobile 1 est séparé de ce coffre de chargement par une cloison de séparation 3.

Si l'invention s'appliquera plus particulièrement à un tel véhicule utilitaire, elle ne se limitera toutefois pas à ce type de véhicule, mais pourra également s'appliquer à tout autre véhicule automobile.

Le véhicule automobile 1 comporte ici exactement deux sièges, dont un siège conducteur 2 et un siège passager 10 situé à côté du siège conducteur 2. Tel qu'il est représenté sur les figures 7 à 10, le siège passager 10 est situé à droite du siège conducteur 2.

La présente invention porte alors plus précisément sur ce siège passager 10.

Ce siège passager 10 est escamotable, c'est-à-dire qu'il peut basculer de manière à libérer de l'espace de chargement dans le véhicule.

Comme le montre schématiquement la figure 1, ce siège passager 10 comporte une assise 200 et un dossier 300 montés sur une même structure porteuse 100.

L'assise 200 et le dossier 300 comportent chacun une armature recouverte, pour le confort du passager, d'une garniture.

Sur les figures 1 et 2, l'assise 200 et le dossier 300 sont représentés en position d'utilisation, c'est-à-dire en position pour accueillir un passager.

Dans cette position d'utilisation, l'assise 200 s'étend sensiblement horizontalement (à 20 degrés près) et elle présente un bord avant 201, un bord arrière 202, et deux bords latéraux.

Dans cette position d'utilisation, le dossier 300 est légèrement incliné vers l'arrière (avec un angle compris entre 5 et 45 degrés par rapport à la verticale) et il présente un bord supérieur 301, un bord inférieur 302, et deux bords latéraux.

Le siège passager 10 présente de nombreuses mobilités, afin de permettre de l'utiliser de différentes façons, comme cela sera bien exposé à la fin de cet exposé, en référence aux figures 7 à 10.

Pour bien comprendre l'invention, on peut tout d'abord décrire brièvement ces mobilités, en référence à la figure 1.

L'assise 200 est montée mobile sur la structure porteuse 100 entre une position d'utilisation et une position escamotée vers l'avant.

Selon une caractéristique particulièrement avantageuse de l'invention, elle est plus précisément montée mobile sur la structure porteuse 100 via deux bielles 410 qui sont chacune articulées, d'un côté, sur l'assise 200 et, de l'autre, sur la structure porteuse 100.

Dans la suite de la description, on dira de deux éléments qu'ils sont « articulés » lorsqu'ils seront connectés ensemble au moyen d'une simple liaison pivot.

Chaque bielle 410 présente ainsi une unique mobilité par rapport à l'assise 200, qui est une mobilité de pivotement autour d'un premier axe de pivot A3, et une unique mobilité par rapport à la structure porteuse 100, qui est une mobilité de pivotement autour d'un second axe de pivot A4.

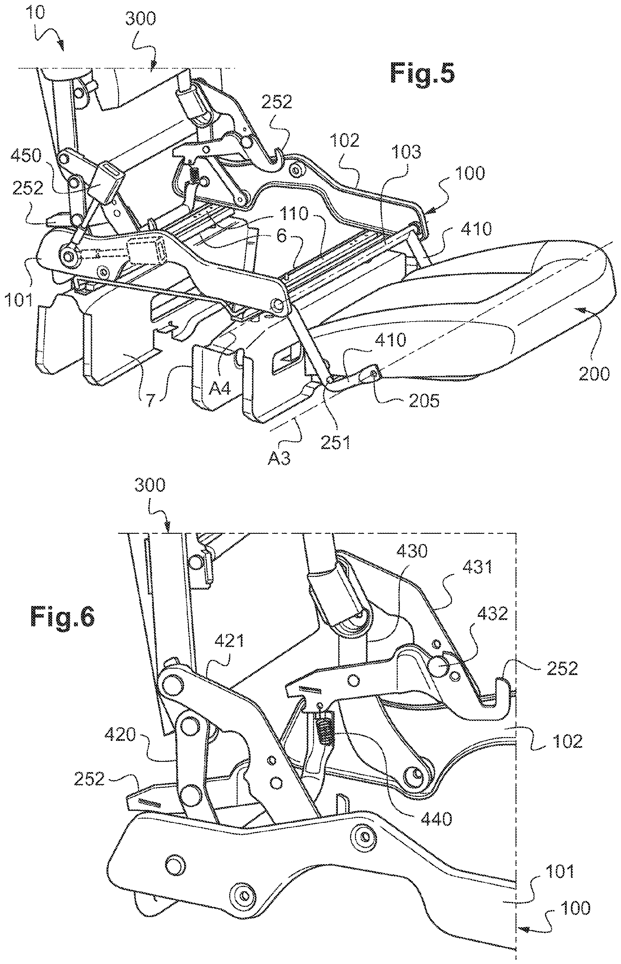

Ce second axe de pivot A4 est globalement situé sous le bord avant 201 de l'assise 200 (en position d'utilisation). Il s'étend parallèlement au premier axe de pivot A3 (aux défauts de montage près), et orthogonalement à l'axe longitudinal du véhicule automobile. Ainsi, l'assise 200 peut être déplacée depuis sa position d'utilisation (voir figure 2) jusqu'à une position escamotée vers l'avant sous la planche de bord du véhicule (voir figure 5), en conservant une orientation sensiblement horizontale.

Comme le montre la figure 1, le dossier 300 est quant à lui monté mobile en basculement sur la structure porteuse 100 autour d'un axe inférieur A1. Cet axe inférieur A1 est globalement situé sous le bord inférieur 302 du dossier 300. Il s'étend parallèlement aux axes de pivot A3, A4 (aux défauts de montage près). Ainsi, le dossier 300 peut basculer depuis sa position d'utilisation (voir figure 2) jusqu'à une position rabattue vers l'avant, à la place de l'assise 200.

On comprend ici que le dossier 300 ne peut être positionné en position rabattue vers l'avant que si l'assise 200 a préalablement été escamotée vers l'avant.

Préférentiellement, la structure porteuse 100 est par ailleurs montée mobile sur un support 5 fixé au plancher du véhicule. Elle présente ainsi une mobilité de translation selon un axe de glissière A5 qui est parallèle aux axes de pivot A3, A4 (aux défauts de montage près).

De cette manière, le siège passager 10 peut être rapproché ou éloigné du siège conducteur 2.

On peut maintenant décrire plus en détail comment, dans le mode de réalisation représenté sur les figures, ces différentes mobilités sont en pratique mises en œuvre.

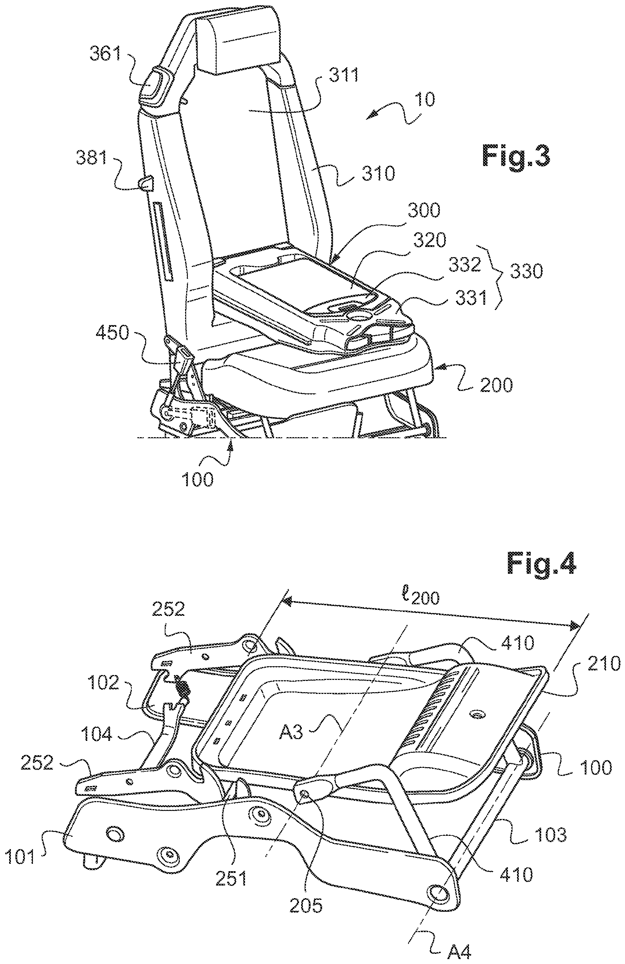

Comme le montre la figure 4, la structure porteuse 100 présente une forme de cadre rectangulaire. Elle comporte ainsi deux flancs 101, 102 latéraux symétriques, connectés ensemble à l'avant et à l'arrière par des traverses avant 103 et arrière 104.

Comme le montre la figure 5, cette structure porteuse 100 est équipée de deux rails mobiles 110 parallèles qui sont soudés sous les deux flancs 101, 102 et qui sont montés dans deux rails fixes 6 parallèles de manière à former une sorte de glissière. Ces deux rails fixes 6 sont vissés sur le châssis 7 du véhicule.

Cette glissière est représentée schématiquement sur la figure 1. Comme le montre cette même figure 1, il est prévu des moyens de blocage 150 de la mobilité de cette glissière, pour permettre d'immobiliser le siège passager 10. Il est également prévu un moyen de déverrouillage 160 de ces moyens de blocage 150, pour permettre au passager de déplacer le siège passager 10 de droite à gauche.

Ici, les rails fixes 6 sont crantés et les rails mobiles 110 comportent des dents mobiles qui sont adaptées à coopérer avec les crans des rails fixes 6 pour bloquer la mobilité de translation de la structure porteuse 100 selon l'axe de glissière A4. Le moyen de déverrouillage 160 est alors formé par un levier qui permet de désengager les dents des crans, de manière à libérer la mobilité de translation de la structure porteuse 100 selon l'axe de glissière A4.

Comme le montrent les figures 4 et 5, la traverse avant 103 de la structure porteuse 100 est montée mobile en rotation sur les flancs latéraux 101, 102 de cette structure porteuse 100, autour du second axe de pivot A4.

Les bielles 410, dont on rappelle qu'elles connectent l'assise 200 à la structure porteuse 100, sont alors soudées par une première de leurs extrémités sur cette traverse avant 103, ce qui leur offre leur mobilité de rotation autour du second axe de pivot A4.

Les bielles 410 sont par ailleurs articulées par leurs secondes extrémités sur des pions 205 fixés à l'armature de l'assise 200.

Comme le montre bien la figure 4, l'armature 210 de l'assise 200 est ici formée par une coque rigide globalement rectangulaire, sur les bords latéraux de laquelle sont situés les deux pions 205.

Sur cette figure 4, on observe que l'assise 200 s'étend sur une longueur ℓ₂₀₀ et que les pions 205 sont situés à une distance des bords avant 201 et arrière 202 de l'assise supérieure au quart de cette longueur ℓ₂₀₀. En pratique, les pions 205 sont placés environ à mi-longueur de l'assise 200.

De cette manière, pendant le basculement des bielles 410 autour du second axe de pivot A4, il est possible de maintenir l'assise 200 sensiblement à l'horizontale tout en s'assurant qu'aucun obstacle ne se trouve sur la trajectoire de l'assise 200.

Comme le montre la figure 1, il est prévu des moyens de blocage 250 de la mobilité de l'assise 200, qui permettent de retenir l'assise 200 en position d'utilisation. Il est également prévu un moyen de déverrouillage 260 de ces moyens de blocage 250, pour permettre à l'usager de déplacer l'assise 200 en position escamotée vers l'avant.

Ici, comme le montrent les figures 4 et 5, les moyens de blocage 250 comportent deux ergots 251 fixés à l'armature de l'assise 200. Ces deux ergots 251 sont plus précisément situés en saillie des bords latéraux de l'armature 210 de l'assise 200, à proximité du bord arrière de l'assise 200.

Ces moyens de blocage 250 comportent également deux pattes basculantes 252 adaptées à venir crocheter les ergots 251 pour bloquer l'assise 200 en position d'utilisation. Ces pattes basculantes 252 présentent à cet effet, à leurs extrémités avant, des crochets pouvant venir s'accrocher aux ergots 251 lorsque le dossier 300 et l'assise 200 sont en position d'utilisation.

Le moyen de déverrouillage 260 comporte alors une poignée 261 (figure 2) accessible sur le côté droit du siège, à hauteur de l'assise 200, et qui permet de faire pivoter les deux pattes basculantes 252 pour que leurs crochets s'écartent des ergots 251 et libèrent la mobilité de l'assise 200.

Ici, comme le montre la figure 4, les bielles 410 sont coudées autour d'un axe parallèle aux axes de pivot A3, A4. Elles sont plus précisément coudées vers le haut. De cette manière, comme le montre la figure 5, elles permettent à l'assise 200 de pivoter autour du premier axe de pivot A3 (afin que l'assise reste horizontale pendant la rotation des bielles 410 autour du second axe de pivot A4), sans que les ergots 251 ne viennent percuter ces bielles 410. Ces bielles 410 forment toutefois une butée pour les ergots 251 lorsqu'elles ont complètement basculé vers l'avant. Elles délimitent plus précisément un berceau d'accueil des ergots 251, qui assure à l'assise 200 de prendre une orientation adéquate afin de pouvoir rentrer sous la planche de bord du véhicule.

Comme cela a déjà été mentionné en référence à la figure 1, le dossier 300 est articulé sur la structure porteuse 100 autour de l'axe inférieur A1.

Pour cela, comme le montre bien la figure 6, le siège 10 comporte quatre biellettes 420, 421, 430, 431 réparties par paire de chaque côté du dossier 300.

Chaque paire comporte une biellette avant et une biellette arrière articulées, à une de leurs extrémités, sur l'un des flancs 101, 102 de la structure porteuse 100, et, à l'autre de leurs extrémités, sur l'ossature du dossier 300.

Ces biellettes 420, 421, 430, 431 sont conçues pour permettre au dossier 300 de basculer selon un mouvement de pseudo-rotation autour de l'axe inférieur A1.

On observe sur cette figure 6 que chacune des pattes basculantes 252 est montée pivotante sur l'une des biellettes arrière 420, 430.

On y observe également que chaque patte basculante 252 est équipée d'un moyen de rappel qui lui permet de se crocheter automatiquement aux ergots 251 de l'assise 200 lorsque cette dernière est ramenée en position d'utilisation. Ce moyen de rappel se présente ici sous la forme d'un ressort de traction 440 qui est connecté, d'un côté, à la structure porteuse 100, et, de l'autre, à la patte basculante 252.

On y observe enfin que chaque patte basculante 252 définit, entre son axe de pivotement et son extrémité en forme de crochet, une fente adaptée à venir se crocheter sur un ergot 432 situé sur l'une des biellettes avant 421, 431. Cet ergot 432 forme ainsi une butée limitant la course de la patte basculante 252 lorsque l'assise 200 est placée en position escamotée vers l'avant.

Comme le montre la figure 1, il est par ailleurs prévu des moyens de blocage 350 de la mobilité de basculement du dossier 300 autour de l'axe inférieur A1, qui permettent de bloquer le dossier 300 en position d'utilisation. Il est également prévu un moyen de déverrouillage 360 de ces moyens de blocage 350 pour permettre le basculement du dossier 300 en position rabattue.

Ces moyens de blocage et de déverrouillage 350, 360 étant bien connus de l'homme du métier, ils ne seront pas décrits. On observera seulement sur la figure 3 que les moyens de déverrouillage comportent notamment un levier 361 accessible à l'usager sur le côté droit du dossier 300, en haut de celui-ci.

Comme le montre la figure 5, le pédoncule 450, dans lequel peut se verrouiller la boucle de ceinture de sécurité du passager, est articulé sur la structure porteuse 100. Il est en outre couplé au dossier 300 de telle manière que, lorsque le dossier 300 bascule depuis sa position d'utilisation vers sa position rabattue vers l'avant, le pédoncule 450 bascule automatiquement depuis une position accessible à l'usager (en trait continu sur la figure 5) jusqu'à une position inclinée vers l'avant (en pointillés sur la figure 5). De cette manière, en position inclinée, ce pédoncule 450 ne forme pas obstacle au chargement d'un quelconque objet dans le véhicule, par-dessus le dossier 300 en position rabattue.

Il peut arriver que le conducteur souhaite disposer d'une tablette, afin par exemple de pouvoir écrire sur une feuille posée dessus.

Ici, le dossier, lorsqu'il bascule autour de l'axe inférieur A1, prend la place de l'assise si bien qu'il se trouve trop bas pour servir de tablette.

Pour remédier à ce problème, comme le montrent les figures 1 à 3, le dossier 300 est ici formé de deux parties, dont une partie périphérique 310 qui est montée mobile en basculement sur la structure porteuse 100 autour de l'axe inférieur A1, et une partie centrale (ci-après appelée « médaillon 320 ») qui est montée mobile en basculement sur la partie périphérique 310 autour d'un axe supérieur A2 situé au-dessus de l'axe inférieur A1, parallèlement à ce dernier (aux défauts de montage près).

La partie périphérique 310 comporte les côtés et le bord supérieur du dossier 300. Elle supporte notamment l'appui-tête. En position relevée, le médaillon 320 se loge quant à lui dans l'ouverture délimitée par la partie périphérique 310.

Ici, chacune des deux parties du dossier comporte sa propre armature, l'une étant articulée sur l'autre autour de l'axe supérieur A2.

Chacune des armatures des deux parties du dossier 300 est alors recouverte d'une partie de la garniture du dossier. Ainsi, lorsque le dossier 300 est en position d'utilisation et que le médaillon 320 est relevé, le dos du passager est prévu pour venir s'appuyer conjointement sur les garnitures des deux parties 310, 320 du dossier 300.

Le conducteur pourra en revanche, en l'absence de passager, faire basculer le médaillon 320 dans une position sensiblement horizontale (appelée « position tablette ») représentée sur la figure 3.

Comme le montre cette figure 3, le médaillon 320 comporte une coque rigide 330 qui recouvre l'ensemble de sa face arrière.

Cette coque rigide 330 comporte un socle 331 qui est fixé à l'armature du médaillon 320, et une plaquette 332 qui est articulée sur le socle 331 et qui, une fois ouverte, laisse accès à un espace de rangement et/ou à un support d'écran informatique.

Comme le montre la figure 1, il est par ailleurs prévu des moyens de blocage 370 de la mobilité de basculement du médaillon 320 autour de l'axe supérieur A2, qui permettent de bloquer le médaillon en position relevée. Il est également prévu un moyen de déverrouillage 380 de ces moyens de blocage 370 pour permettre le basculement du médaillon 320 en position tablette.

Ici, les moyens de blocage comportent un crochet qui est monté mobile sur la partie périphérique 310 du dossier 300 et qui est adapté à s'accrocher à un ergot prévu sur le médaillon 320 pour bloquer ce dernier en position relevée. Le moyen de déverrouillage comporte quant à lui un levier 381 (figure 3) accessible à l'usager sur le côté droit du dossier 300, à mi-hauteur de celui-ci, et qui permet de manœuvrer le crochet pour libérer l'ergot du médaillon.

On observe sur cette figure 3 que la partie périphérique 310 du dossier 300 comporte une coque rigide 311 qui recouvre l'ensemble de sa face arrière (et qui ferme donc ici à l'arrière l'emplacement du médaillon 320). De cette manière, lorsque l'ensemble du dossier 300 est basculé en position rabattue vers l'avant, cette coque rigide 311 est prévue pour protéger le dossier 300.

Grâce à ses différentes mobilités, le siège passager 10 permet d'embarquer des charges encombrantes.

Comme le montre la figure 8, la cloison de séparation 3 présente à cet effet une ouverture 4 qui permet de faire communiquer le coffre du véhicule avec l'habitacle.

Cette ouverture 4 présente ici une forme rectangulaire. Elle s'étend sur la largeur environ du siège passager 10, et sur une hauteur inférieure à la hauteur du dossier 300.

Sur la figure 8, le dossier 300 est en position rabattue (l'assise étant en position escamotée vers l'avant). Dans cette configuration, il est alors possible d'embarquer une charge 600 particulièrement longue, de largeur et de hauteur égales à la largeur et à la hauteur de l'ouverture 4.

Sur la figure 7, la charge embarquée 610 est ici encore particulièrement longue puisqu'elle s'étend du fond du coffre jusqu'à la planche de bord du véhicule automobile. Elle présente en revanche une largeur réduite. Alors, le conducteur peut rapprocher le siège passager 10 de son siège conducteur 2 (de manière à laisser de l'espace pour la charge entre la portière passager et le siège passager), et il peut placer le dossier 300 en position d'utilisation et le médaillon 320 en position tablette.

Sur la figure 9, il n'est pas prévu d'embarquer de charge de grande longueur. Les dossier 300 et assise 200 sont alors placés en position d'utilisation pour accueillir un passager. Dans cette configuration, le passager peut éloigner son siège passager 10 du siège conducteur 2, de manière à disposer de davantage d'espace au niveau de ses coudes et épaules.

Sur la figure 10, il est prévu d'embarquer une charge 610 de grande longueur et de section réduite, ainsi que d'accueillir un passager. Les dossier 300 et assise 200 sont alors placés en position d'utilisation et le siège passager 10 est rapproché du siège conducteur 2 (de manière à laisser de l'espace pour la charge entre la portière passager et le siège conducteur).

On comprend ainsi que grâce aux mobilités du siège passager 10, l'habitacle du véhicule automobile 1 présente une grande modularité.

La présente invention n'est nullement limitée au mode de réalisation décrit et représenté, mais l'homme du métier saura y apporter toute variante conforme revendications jointes.

Ainsi, on aurait pu prévoir, de manière plus classique, de monter la structure porteuse du siège passager sur le châssis du véhicule avec une mobilité de translation selon un axe parallèle à l'axe longitudinal du véhicule automobile.

Selon une autre variante, le véhicule pourrait être dépourvu de cloison de séparation.

Encore en variante, le dossier pourrait être monobloc et dépourvu de médaillon.

Selon une autre variante, on aurait pu prévoir une seule bielle, ou au contraire plus de deux bielles, pour relier l'assise à la structure porteuse du siège.

## Revendications

1. Siège (10) de véhicule automobile (1) comprenant :
- une structure porteuse (100),
- une assise (200) montée mobile sur la structure porteuse (100) entre une position d'utilisation et une position escamotée, et
- un dossier (300) monté mobile en basculement sur la structure porteuse (100) autour d'un axe inférieur (A1), entre une position d'utilisation et une position rabattue vers l'avant, à la place de l'assise,
**caractérisé en ce que** le dossier (300) comporte deux parties (310, 320), dont une partie périphérique (310) qui est montée mobile en basculement sur la structure porteuse (100) autour de l'axe inférieur (A1), et une partie centrale (320) qui est montée mobile en basculement sur la partie périphérique (310) autour d'un axe supérieur (A2) distinct de l'axe inférieur (A1), chacune des deux parties (310, 320) comportant une armature et, à l'avant de l'armature, une partie d'une garniture du dossier (300).

2. Siège (10) selon la revendication précédente, dans lequel l'assise (200) est montée mobile par rapport à la structure porteuse (100) au moyen d'au moins une bielle (410) qui est articulée, d'un côté, sur l'assise (200) et, de l'autre, sur la structure porteuse (100), autour de deux axes de pivot (A3, A4) distincts.

3. Siège (10) selon la revendication précédente, dans lequel lesdits deux axes de pivot (A3, A4) sont parallèles.

4. Siège (10) selon l'une des deux revendications précédentes, dans lequel chaque bielle (410) présente une forme coudée.

5. Siège (10) selon l'une des trois revendications précédentes, dans lequel l'assise (200) présentant, en position d'utilisation, un bord avant (201) et un bord arrière (202), chaque bielle (410) est articulée sur l'assise (200) à une distance des bords avant (201) et arrière (202) de l'assise (200) qui est supérieure au quart de la longueur (ℓ₂₀₀) de l'assise (200).

6. Siège (10) selon l'une des revendications précédentes, dans lequel il est prévu des moyens de blocage (250) de la mobilité de l'assise (200) par rapport à la structure porteuse (100), combinés à un moyen de déverrouillage (260) de ces moyens de blocage (250).

7. Siège (10) selon l'une des revendications précédentes, dans lequel la partie centrale (320) du dossier (300) comporte à l'arrière une coque rigide (330).

8. Siège (10) selon la revendication précédente, dans lequel ladite coque rigide (330) comporte un socle (331) fixé à l'armature de la partie centrale (320) du dossier (300), et une plaquette (332) articulée sur ce socle (331).

9. Siège (10) selon l'une des revendications précédentes, dans lequel il est prévu un support (5) équipé de moyens de fixation au plancher du véhicule automobile (1), et dans lequel la structure porteuse (100) est montée mobile en translation sur le support (5) selon un axe de glissière (A5) sensiblement parallèle audit axe inférieur (A1).

10. Véhicule automobile (1) comportant un siège conducteur (2) et un siège (10) qui est situé à côté du siège conducteur (2) et qui est conforme à l'une des revendications précédentes.

## Patentansprüche

1. Sitz (10) für ein Kraftfahrzeug (1), umfassend:
- eine Tragstruktur (100),
- eine Sitzfläche (200), die zwischen einer Gebrauchsposition und einer Klappposition beweglich an der Tragstruktur (100) montiert ist, und
- eine Rückenlehne (300), die um eine untere Achse (A1) kippbeweglich zwischen einer Gebrauchsposition und einer nach vorne anstelle der Sitzfläche heruntergeklappten Position an der Tragstruktur (100) montiert ist,
**dadurch gekennzeichnet, dass** die Rückenlehne (300) zwei Teile (310, 320) aufweist, und zwar einen Umfangsteil (310), der um die untere Achse (A1) kippbeweglich an der Tragstruktur (100) montiert ist, und einen mittleren Teil (320), der um eine von der unteren Achse (A1) verschiedene obere Achse (A2) kippbeweglich an dem Umfangsteil (310) montiert ist, wobei jeder der beiden Teile (310, 320) ein Traggerüst und vor dem Traggerüst einen Teil einer Polsterung der Rückenlehne (300) aufweist.

2. Sitz (10) nach dem vorhergehenden Anspruch, wobei die Sitzfläche (200) bezüglich der Tragstruktur (100) mittels mindestens einer Stange (410) beweglich montiert ist, die an einer Seite an der Sitzfläche (200) und an der anderen an der Tragstruktur (100) um zwei separate Schwenkachsen (A3, A4) angelenkt ist.

3. Sitz (10) nach dem vorhergehenden Anspruch, wobei die beiden Schwenkachsen (A3, A4) parallel sind.

4. Sitz (10) nach einem der beiden vorhergehenden Ansprüche, wobei jede Stange (410) eine gebogene Form aufweist.

5. Sitz (10) nach einem der drei vorhergehenden Ansprüche, wobei jede Stange (410), wobei die Sitzfläche (200) in der Gebrauchsposition einen vorderen Rand (201) und einen hinteren Rand (202) aufweist, mit einem Abstand, der größer als ein Viertel der Länge (*l*₂₀₀) der Sitzfläche (200) ist, von dem vorderen (201) und dem hinteren (202) Rand der Sitzfläche (200) an der Sitzfläche (200) angelenkt ist.

6. Sitz (10) nach einem der vorhergehenden Ansprüche, wobei Mittel (250) zum Blockieren der Beweglichkeit der Sitzfläche (200) bezüglich der Tragstruktur (100) vorgesehen sind, die mit einem Entriegelungsmittel (260) dieser Blockierungsmittel (250) kombiniert sind.

7. Sitz (10) nach einem der vorhergehenden Ansprüche, wobei der mittlere Teil (320) der Rückenlehne (300) hinten eine starre Schale (330) aufweist.

8. Sitz (10) nach dem vorhergehenden Anspruch, wobei die starre Schale (330) einen Sockel (331), der an dem Traggerüst des mittleren Teils (320) der Rückenlehne (300) befestigt ist, und eine an diesem Sockel (331) angelenkte Platte (332) aufweist.

9. Sitz (10) nach einem der vorhergehenden Ansprüche, wobei eine Stütze (5) vorgesehen ist, die mit Mitteln zur Befestigung an der Decke des Kraftfahrzeugs (1) ausgerüstet ist, und wobei die Tragstruktur (100) entlang einer Gleitachse (A5), die im Wesentlichen parallel zu der unteren Achse (A1) verläuft, translationsbeweglich an der Stütze (5) montiert ist.

10. Kraftfahrzeug (1), aufweisend einen Fahrersitz (2) und einen Sitz (10), der neben dem Fahrersitz (2) angeordnet ist und der einem der vorhergehenden Ansprüche entspricht.

## Claims

1. Seat (10) for a motor vehicle (1), comprising:
- a supporting structure (100),
- a seat pan (200) mounted so as to be able to move on the supporting structure (100) between a use position and a stowed position, and
- a backrest (300) mounted so as to be able to tilt on the supporting structure (100) about a lower axis (A1), between a use position and a folded-forward position, in place of the seat pan,
**characterized in that** the backrest (300) comprises two parts (310, 320), one of which is a peripheral part (310) that is mounted so as to be able to tilt on the supporting structure (100) about the lower axis (A1), and the other of which is a central part (320) that is mounted so as to be able to tilt on the peripheral part (310) about an upper axis (A2) that is distinct from the lower axis (A1), each one of the two parts (310, 320) comprising a frame and, to the front of the frame, part of a trim of the backrest (300) .

2. Seat (10) according to the preceding claim, wherein the seat pan (200) is mounted so as to be able to move relative to the supporting structure (100) by means of at least one connecting rod (410) that is articulated on one hand to the seat pan (200) and on the other hand to the supporting structure (100), about two distinct pivot axes (A3, A4).

3. Seat (10) according to the preceding claim, wherein said two pivot axes (A3, A4) are parallel.

4. Seat (10) according to either of the two preceding claims, wherein the shape of each connecting rod (410) includes a corner.

5. Seat (10) according to one of the three preceding claims, wherein, the seat pan (200) having a front edge (201) and a rear edge (202) when in the use position, each connecting rod (410) is articulated to the seat pan (200) at a distance from the front (201) and rear (202) edges of the seat pan (200), this distance being greater than one quarter of the length (*l*₂₀₀) of the seat pan (200) .

6. Seat (10) according to one of the preceding claims, there being provided immobilizing means (250) for preventing the seat pan (200) from moving relative to the supporting structure (100), these means being combined with a means (260) for locking these immobilizing means (250).

7. Seat (10) according to one of the preceding claims, wherein the central part (320) of the backrest (300) comprises, at the rear, a rigid shell (330).

8. Seat (10) according to the preceding claim, wherein said rigid shell (330) comprises a base (331) fastened to the frame of the central part (320) of the backrest (300), and a plate (332) articulated to this base (331).

9. Seat (10) according to one of the preceding claims, there being provided a support (5) equipped with means for fastening to the floor of the motor vehicle (1), and wherein the supporting structure (100) is mounted so as to be able to move in translation on the support (5) along a slide axis (A5) that is essentially parallel to said lower axis (A1).

10. Motor vehicle (1) comprising a driver seat (2) and a seat (10) that is located next to the driver seat (2) and that is according to one of the preceding claims.
